# EUROPEAN PATENT APPLICATION

(11) **EP 4 811 001 A1**
(43) Date of publication of application: **23.09.2026**
(21) Application number: 24921577.3
(22) Date of filing: 30.10.2024
(51) Int. Cl.: G01S 17/89, G01S 17/86, G01C 21/16, G01S 19/43

(54) **HIGH-PRECISION POSITIONING METHOD AND SYSTEM BASED ON MULTI-SOURCE FUSION TECHNOLOGY, AND VEHICLE**

(30) Priority: 04.02.2024 CN 202410158149
(71) Applicant: Yutong Bus Co., Ltd., Zhengzhou, Henan 450061 (CN)
(72) Inventor: WANG, Shuo, Zhengzhou, Henan 450061 (CN); NIE, Hongpeng, Zhengzhou, Henan 450061 (CN); XU, Lianjie, Zhengzhou, Henan 450061 (CN); ZHU, Min, Zhengzhou, Henan 450061 (CN); WANG, Zhenyu, Zhengzhou, Henan 450061 (CN); YIN, Hongli, Zhengzhou, Henan 450061 (CN)
(74) Representative: Vogelbruch, Keang
(86) International application number: PCT/CN2024/128544
(87) International publication number: WO 2025/161553

(57) **Abstract**

The present invention relates to a high-precision positioning method and system based on multi-source fusion technology, and a vehicle. By obtaining a point cloud around a vehicle and obtaining a point cloud map by means of point cloud mapping, position information of the vehicle in the point cloud map is obtained; actual point cloud position information is compared with pre-correction point cloud position information corresponding to a pre-correction position of the vehicle in the point cloud map to obtain a positioning offset; and the position of the vehicle is finally corrected by means of the positioning offset to obtain the final positioning of the vehicle. By means of fusing point clouds and combined navigation, a position deviation and a heading angle deviation of a vehicle under conditions where combined navigation fails are corrected, thereby solving the problem in the prior art of a multi-source fusion positioning method having poor applicability.

## Description

### TECHNICAL FIELD

The present invention relates to a high-precision positioning method and a system based on multi-source fusion technology, and a vehicle, and belongs to the technical field of multi-source fusion positioning.

### BACKGROUND ART

In recent years, with the rapid growth of the new energy vehicle industry, the prospect of autonomous driving technology is increasingly favored by vehicle users and vehicle enterprises. Precision positioning is one of the important component modules of an autonomous driving vehicle system, and is one of the necessary conditions for ensuring safe driving of an autonomous driving vehicle.

In the prior art, autonomous driving precision positioning technology is implemented based on a single mode, such as GPS positioning or environmental feature matching. However, such positioning technology has obvious defects and certain limitations. Signal positioning cannot achieve precision positioning in occluded scenarios, and environmental feature matching cannot achieve high-precision positioning when positioning features are few or when the sensor is occluded. Therefore, accurate positioning cannot be achieved under conditions such as occluded environments, sensor obstruction, or few environmental features for matching positioning. This can easily lead to dangers and result in low safety.

In order to solve the problem of low positioning precision, Chinese Patent Application Publication No. CN116660961A provides, based on the fusion of GPS and onboard sensors, a high-precision vehicle positioning method based on GPS and on-board sensor fusion. In this solution, an on-board sensor, an external network detection module, a navigation system, and a traffic light linkage module are respectively connected to a GPS positioner, thereby solving the problem of poor positioning precision of the traditional GPS. However, because the traffic light linkage module is provided, the implementation of this solution needs to be integrated with traffic light information, and the coupling degree with infrastructure is too high. When driving in areas without infrastructure, the traffic light linkage module is meaningless. The applicability on roads is poor without traffic lights, such as on highways, and it cannot meet the requirements of autonomous driving.

Chinese Patent Application Publication No. CN114199259A provides a multi-source fusion navigation positioning method based on motion states and environmental perception, which is implemented by means of a loosely coupled fusion positioning algorithm combining image feature point positions, IMU, Kalman filtering, and GNSS. This solution leverages the role of vision in integrated navigation and solves the problem of poor precision of traditional GPS positioning. However, since it requires the use of a camera to capture image frames and to remove dynamic points from the image frames, its positioning precision is poor in low-visibility environments, such as during blizzards, heavy fog, or other weather conditions. Even in slightly dark environments, such as at night or during rainy and overcast periods, the positioning precision is affected. This solution has high environmental requirements and poor applicability.

### SUMMARY

An objective of the present invention is to provide a high-precision positioning method and a system based on multi-source fusion technology, and a vehicle, so as to solve the problem of poor applicability of multi-source fusion positioning methods in the prior art.

In order to achieve the above objective, the present invention provides the following solutions.

A high-precision positioning method based on multi-source fusion technology provided by the present invention includes the following steps: obtaining a current point cloud around a vehicle; matching the current point cloud with a pre-obtained point cloud map to obtain actual point cloud position information of the current vehicle in the point cloud map; comparing the actual point cloud position information with pre-correction point cloud position information corresponding to a pre-correction position of the vehicle in the point cloud map to obtain a positioning offset; correcting the pre-correction position of the vehicle according to the positioning offset to obtain a final vehicle positioning; and outputting a fusion positioning result.

Further, it includes: pre-dividing the point cloud map into grids to obtain a blocked point cloud map; before matching the current point cloud with the point cloud map, searching, through preliminary positioning, a corresponding block in the blocked laser point cloud map where the vehicle is currently located; and completing matching of the current point cloud with the point cloud map by matching the current point cloud with the corresponding block in the point cloud map.

Further, it includes: using RTK information of the vehicle for the preliminary positioning.

Further, it includes: obtaining the point cloud map by fusing basic positioning information of an integrated navigation system of the vehicle and corresponding point cloud data.

Further, it includes: after obtaining final vehicle positioning, converting the final vehicle positioning and integrated navigation positioning to a same coordinate system for comparison; and calculating an actual deviation between the final vehicle positioning and the integrated navigation positioning, wherein in response to the actual deviation being greater than a deviation threshold, taking the integrated navigation positioning as the fusion positioning result; or in response to the actual deviation being less than the deviation threshold, fusing the final vehicle positioning and the integrated navigation positioning to obtain a fusion result, and taking the fusion result as the fusion positioning result.

Further, it includes: after obtaining a fusion positioning result of a current frame, comparing a fusion positioning result of a previous frame and the fusion positioning result of the current frame, and calculating a difference between the fusion positioning result of the previous frame and the fusion positioning result of the current frame, wherein in response to the difference being greater than a differential threshold, processing the fusion positioning result of the previous frame to obtain a final fusion positioning result; or in response to the difference being less than the differential threshold, taking the fusion positioning result of the current frame as the final fusion positioning result to complete vehicle positioning.

Further, the processing method using the fusion positioning result of the previous frame is extrapolation positioning using IMU information.

Further, the final vehicle positioning and the integrated navigation positioning are fused by a weighted average.

Further, it includes: before obtaining the fusion positioning result, in response to the actual deviation being greater than the deviation threshold, processing the integrated navigation positioning by a Kalman filter to obtain the fusion positioning result; and in response to the actual deviation being less than the deviation threshold, processing the fusion result by a Kalman filter to obtain the fusion positioning result.

Further, it includes: after performing the Kalman filtering, fusing a result of the Kalman filtering with IMU information to obtain the fusion positioning result.

The present invention provides a high-precision positioning system based on multi-source fusion technology, including a memory and a processor, wherein the processor is configured to execute instructions for implementing the above-mentioned high-precision positioning method based on multi-source fusion technology stored in the memory.

The present invention provides a vehicle, including a high-precision positioning system based on multi-source fusion technology, wherein the high-precision positioning system based on multi-source fusion technology is the above-mentioned high-precision positioning system based on multi-source fusion technology.

The present invention includes the following beneficial effects.

By obtaining a point cloud around a vehicle and obtaining a point cloud map by point cloud mapping, position information of the vehicle in the point cloud map is obtained; by comparing the actual point cloud position information with pre-correction point cloud position information corresponding to a pre-correction position of the vehicle in the point cloud map, a positioning offset is obtained; and the position of the vehicle is finally corrected by the positioning offset to obtain the final positioning of the vehicle. By fusing point clouds and integrated navigation, a position deviation and a yaw angle offset of a vehicle under conditions where integrated navigation fails are corrected, thereby solving the problem of poor applicability of multi-source fusion positioning methods in the prior art.

### BRIEF DESCRIPTION OF DRAWINGS

FIG. 1 is a flow chart of a fusion positioning technical solution based on a laser SLAM algorithm of the present invention; and
FIG. 2 is a flow chart of fusion positioning based on a laser SLAM algorithm and an integrated navigation of the present invention.

### DETAILED DESCRIPTION OF EMBODIMENTS

The concept of the present invention includes: obtaining a point cloud around a vehicle and obtaining a point cloud map by point cloud mapping, thereby obtaining position information of the vehicle in the point cloud map; comparing actual point cloud position information with pre-correction point cloud position information corresponding to a pre-correction position of the vehicle in the point cloud map to obtain a positioning offset; and finally correcting the position of the vehicle by the positioning offset to obtain the final positioning of the vehicle.

In this embodiment, an inertial navigation system is used as the integrated navigation system, and vehicle RTK is used as the preliminary positioning method to provide a more detailed description of the present invention.

An embodiment of a high-precision positioning method based on multi-source fusion technology is described as follows.

The high-precision positioning method based on multi-source fusion technology provided by the present invention adopts the laser SLAM (simultaneous localization and mapping) for mapping and positioning.

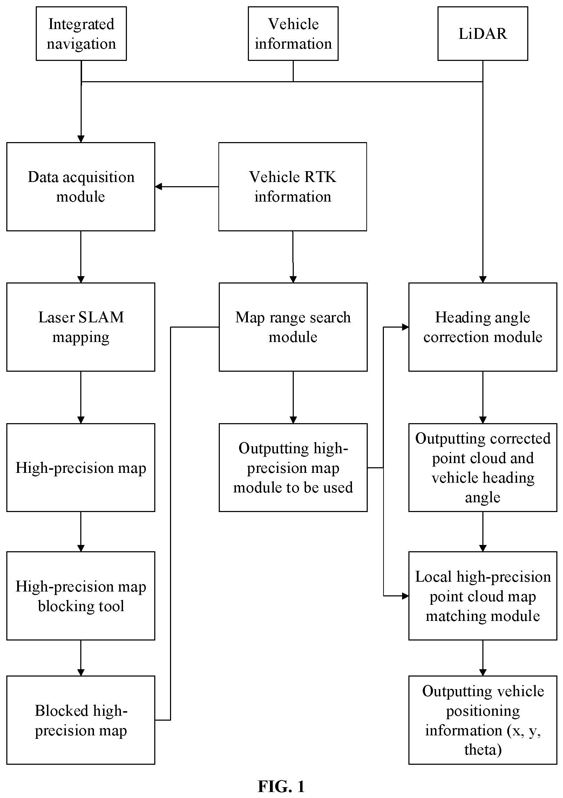

As shown in FIG. 1, the data acquisition module collects integrated navigation information, vehicle information, LiDAR information, and vehicle RTK (real-time kinematic) information. Subsequently, laser SLAM mapping is performed to obtain a laser point cloud map, i.e., a high-precision map.

After the high-precision map is pre-obtained, the high-precision map is subjected to block processing by means of a high-precision map blocking tool to obtain a blocked laser point cloud map (i.e., a blocked high-precision map). The map range search module uses the RTK information collected by the vehicle and the blocked high-precision map to perform preliminary positioning of the vehicle, thereby obtaining, from the blocked high-precision map, the block where the vehicle is currently located as a high-precision map module to be used. Since RTK acquires a position by means of carrier phase differential technology and RTK is real-time dynamic, it is continuously determined whether the current position needs to be updated. When the position is updated, the current high-precision map is updated again by means of the laser SLAM mapping and the high-precision map blocking tool, so that the high-precision map module to be used is continuously output.

Since a data volume of a LiDAR point cloud map constructed by the acquired integrated navigation information, vehicle information, LiDAR information, and vehicle RTK information is very large, the amount of computation during positioning will also increase accordingly. Therefore, after a large-scale laser point cloud map is constructed, the map needs to be divided into grids to form blocked map modules with high precision and small data volume, so as to reduce the amount of computation during positioning.

At a moment when the vehicle starts to run and after the vehicle runs a certain distance, the LiDAR emits laser and receives the reflected laser light to obtain the point cloud around the vehicle. At the moment when the vehicle starts to run and after the vehicle runs a certain distance, the LiDAR emits and receives laser light to obtain distance information of the vehicle relative to the same landmark at both time points, thereby acquiring positions and heading angles of the vehicle at the start moment and after traveling a certain distance. The vehicle heading angle and the corrected point cloud are compared with the pre-correction heading angle of the vehicle and the point cloud corresponding to the pre-correction vehicle position in the laser point cloud map, so as to obtain a translation offset and a yaw angle offset.

An optimal translation offset is determined by comparing among numerous translation offsets, and the optimal translation offset is sent to a position fitting module. The heading angle of the vehicle is corrected by means of the yaw angle offset, and the pre-correction vehicle position is corrected according to the translation offset and the corrected heading angle, thereby obtaining the vehicle SLAM fusion positioning information.

The vehicle SLAM fusion positioning information is coordinate information (x, y, theta), where x is the horizontal axis coordinate, y is the vertical axis coordinate, and theta is the heading angle.

In order to make the SLAM fusion positioning technical solution introduced in this embodiment clearer, a specific application scenario is provided below to explain the SLAM fusion positioning in this embodiment in more detail.

After a vehicle enters a tunnel, because the tunnel is severely occluded, traditional GPS positioning cannot accurately obtain a precise position of the vehicle. After the vehicle enters the tunnel, a GPS signal is lost, and the integrated navigation uses a speed of the vehicle at the time of entering the tunnel as an estimated average speed. The estimated average speed is multiplied by a time during which the vehicle travels in the tunnel to roughly estimate the position of the vehicle. At a certain moment when the vehicle runs in the tunnel, the integrated navigation estimates an approximate position and heading angle of the vehicle at this moment, which serves as a pre-correction position of the vehicle. In the SLAM fusion positioning method provided in this embodiment, a point cloud around the vehicle is established by means of a LiDAR emitting the laser, and the vehicle is matched with a block of a corresponding point cloud map by means of the point cloud to obtain a real point cloud position and heading angle of the vehicle in the point cloud map at the current moment.

The real point cloud position and heading angle in the point cloud map are compared with a pre-correction point cloud position and heading angle of the pre-correction position of the vehicle in the point cloud map to obtain a translation offset and a yaw angle offset of the vehicle, and the integrated navigation positioning is corrected by means of the translation offset and the yaw angle offset to obtain a real position and heading angle of the vehicle in the tunnel.

The vehicle information includes a basic positioning system of the vehicle itself and a vehicle code. The integrated navigation uses an inertial navigation system and an optimal estimation algorithm of Kalman filtering.

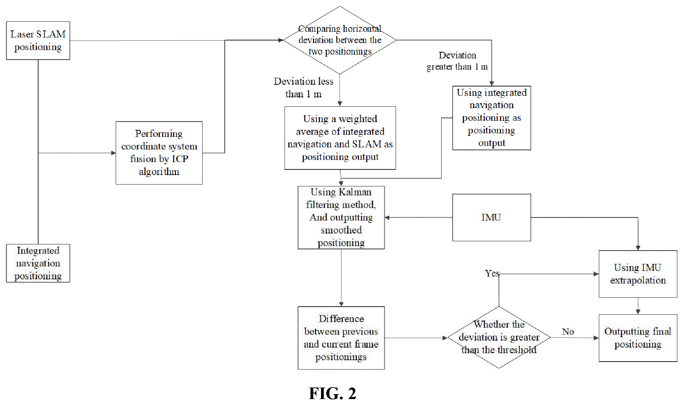

In order to more accurately obtain a specific position of the vehicle at a certain moment in travel, so as to provide more accurate map data for autonomous driving to ensure the safety of autonomous driving, as shown in FIG. 2, coordinates (x, y, theta) obtained above are fused with integrated navigation positioning coordinates, so that the fused positioning method is more accurate, and then the accuracy of positioning is ensured through comparison between output data of a previous frame and a subsequent frame.

First, the above fusion positioning result is obtained, i.e., the obtained coordinates (x, y, theta); and then, the coordinates of the vehicle in the integrated navigation system, i.e., coordinates in a geodetic coordinate system, are obtained by means of the integrated navigation. Coordinates of the vehicle in the geodetic coordinate system in the integrated navigation system are transformed to a coordinate system where the fusion positioning result (x, y, theta) is located by means of an ICP (iterative closest point) algorithm.

After the coordinate system transformation by means of ICP, the coordinates (x, y, theta) in the fusion positioning coordinate system are compared with the coordinates of the vehicle from the integrated navigation in the fusion coordinate system, and a deviation in a horizontal direction between (x, y, theta) and the coordinates of the vehicle from the integrated navigation in the fusion coordinate system is obtained. A deviation threshold of 1 m is set based on empirical data, and the deviation threshold is set before the vehicle leaves the factory.

If the deviation in the horizontal direction between (x, y, theta) and the coordinates of the vehicle from the integrated navigation in the fusion coordinate system is greater than 1 m, an integrated navigation positioning result is directly output at this time. If the deviation in the horizontal direction between (x, y, theta) and the coordinates of the vehicle from the integrated navigation in the fusion coordinate system is less than 1 m, (x, y, theta) and the coordinates of the vehicle from the integrated navigation in the fusion coordinate system are subjected to a weighted average, and a value after the weighted average is output.

After the deviation in the horizontal direction is determined, a Kalman filtering method is used immediately. A linear system state equation is used to perform an optimal estimation of the system state through system input and output observation data, which plays a role of filtering. Then, an IMU (inertial measurement unit) is used to measure an angular rate and acceleration of the vehicle, and IMU data acquired by the vehicle and Kalman-filtered positioning data are subjected to fusion processing to output a fusion positioning result after filtering processing, ensuring that there will not be too large a fluctuation between data frames, so as to improve the stability of the system.

Finally, the filtered fusion positioning result of the previous frame is compared with that of the current frame, and the difference between them is calculated. A differential threshold for the filtered fusion positioning results between the previous frame and the current frame is set, wherein the differential threshold is configured before the vehicle leaves the factory.

If the difference between the filtered fusion positioning result of the previous frame and the filtered fusion positioning result of the current frame is greater than the differential threshold, extrapolation positioning is performed by combining the filtered fusion positioning result of the previous frame with the IMU information of the current frame, and the positioning result after extrapolation positioning is used as the final fusion positioning result. If the difference between the filtered fusion positioning result of the previous frame and the filtered fusion positioning result of the current frame is less than the differential threshold, the filtered fusion positioning result of the current frame is directly used as the final fusion positioning result.

By comparing previous frame data with current frame data, even if positioning data drift occurs during vehicle travel, a final fusion positioning result is not affected.

An embodiment of a high-precision positioning system based on multi-source fusion technology is provided as follows.

This embodiment provides a high-precision positioning system based on multi-source fusion technology, including a processor and a memory, wherein a computer program stored in the memory can run on the processor, and the processor executes the computer program to complete the high-precision positioning method based on multi-source fusion technology mentioned in the embodiment of the high-precision positioning method based on multi-source fusion technology.

That is to say, the high-precision positioning method based on multi-source fusion technology, as described in detail in the embodiments of the high-precision positioning method based on multi-source fusion technology, is implemented by being programmed as a computer program and burned into a memory. The processor receives the information required by the high-precision positioning method based on multi-source fusion technology and processes it.

The high-precision positioning method based on multi-source fusion technology has been described in detail in the embodiment of the high-precision positioning method based on multi-source fusion technology, and will not be described again.

An embodiment of an autonomous driving vehicle is provided as follows.

This embodiment provides an autonomous driving vehicle, including a vehicle body and a high-precision positioning system based on multi-source fusion technology, wherein the high-precision positioning system based on multi-source fusion technology has been described in detail in the embodiment of the high-precision positioning system based on multi-source fusion technology, and will not be described again.

## Claims

1. A high-precision positioning method based on multi-source fusion technology, **characterized by** comprising following steps: obtaining a current point cloud around a vehicle; matching the current point cloud with a pre-obtained point cloud map to obtain actual point cloud position information of the current vehicle in the point cloud map; comparing the actual point cloud position information with pre-correction point cloud position information corresponding to a pre-correction position of the vehicle in the point cloud map to obtain a positioning offset; correcting the pre-correction position of the vehicle according to the positioning offset to obtain a final vehicle positioning; and outputting a fusion positioning result.

2. The high-precision positioning method based on multi-source fusion technology according to claim 1, further comprising: pre-dividing the point cloud map into grids to obtain a blocked point cloud map; before matching the current point cloud with the point cloud map, searching, through preliminary positioning, a corresponding block in the blocked laser point cloud map where the vehicle is currently located; and completing matching of the current point cloud with the point cloud map by matching the current point cloud with the corresponding block in the point cloud map.

3. The high-precision positioning method based on multi-source fusion technology according to claim 2, further comprising: using RTK information of the vehicle for the preliminary positioning.

4. The high-precision positioning method based on multi-source fusion technology according to claim 1, further comprising: obtaining the point cloud map by fusing basic positioning information of an integrated navigation system of the vehicle and corresponding point cloud data.

5. The high-precision positioning method based on multi-source fusion technology according to claim 1, 2, 3 or 4, further comprising: after obtaining final vehicle positioning, converting the final vehicle positioning and integrated navigation positioning to a same coordinate system for comparison; and calculating an actual deviation between the final vehicle positioning and the integrated navigation positioning, wherein in response to the actual deviation being greater than a deviation threshold, taking the integrated navigation positioning as the fusion positioning result; or in response to the actual deviation being less than the deviation threshold, fusing the final vehicle positioning and the integrated navigation positioning to obtain a fusion result, and taking the fusion result as the fusion positioning result.

6. The high-precision positioning method based on multi-source fusion technology according to claim 5, further comprising: after obtaining a fusion positioning result of a current frame, comparing a fusion positioning result of a previous frame and the fusion positioning result of the current frame, and calculating a difference between the fusion positioning result of the previous frame and the fusion positioning result of the current frame, wherein in response to the difference being greater than a differential threshold, processing the fusion positioning result of the previous frame to obtain a final fusion positioning result; or in response to the difference being less than the differential threshold, taking the fusion positioning result of the current frame as the final fusion positioning result to complete vehicle positioning.

7. The high-precision positioning method based on multi-source fusion technology according to claim 6, wherein a method of processing the fusion positioning result of the previous frame is extrapolation positioning using IMU information.

8. The high-precision positioning method based on multi-source fusion technology according to claim 5, wherein the final vehicle positioning and the integrated navigation positioning are fused by a weighted average.

9. The high-precision positioning method based on multi-source fusion technology according to claim 5, further comprising: before obtaining the fusion positioning result, in response to the actual deviation being greater than the deviation threshold, processing the integrated navigation positioning by a Kalman filter to obtain the fusion positioning result; and in response to the actual deviation being less than the deviation threshold, processing the fusion result by a Kalman filter to obtain the fusion positioning result.

10. The high-precision positioning method based on multi-source fusion technology according to claim 9, further comprising: after performing the Kalman filtering, fusing a result of the Kalman filtering with IMU information to obtain the fusion positioning result.

11. A high-precision positioning system based on multi-source fusion technology, **characterized by** comprising a memory and a processor, wherein the processor is configured to execute instructions stored in the memory for implementing the high-precision positioning method based on multi-source fusion technology according to any one of claims 1 to 10.

12. A vehicle, **characterized by** comprising a high-precision positioning system based on multi-source fusion technology, wherein the high-precision positioning system based on multi-source fusion technology is the high-precision positioning system based on multi-source fusion technology according to claim 11.
